# EUROPÄISCHE PATENTANMELDUNG

(11) **EP 2 559 677 A2**
(43) Veröffentlichungstag der Anmeldung: **20.02.2013**
(21) Anmeldenummer: 12191075.6
(22) Anmeldetag: 01.12.2008
(51) Int. Cl.: C04B 35/115, C04B 35/645, C04B 35/626, C04B 35/44, C04B 35/443, C04B 35/581

(54) **Keramikkörper und Verfahren zu dessen Herstellung**

(30) Priorität: 07.12.2007 DE 102007059091
(62) Teilanmeldung aus: 08020821.8
(71) Anmelder: CeramTec-Etec GmbH, 53797 Lohmar (DE)
(72) Erfinder: Schnetter, Dr. Lars, 53518 Wimbach (DE)
(74) Vertreter: Uppena, Franz

(57) **Zusammenfassung**

Es wird ein Verfahren zur Herstellung einer polykristallinen Keramik beschrieben, wobei ein Keramikgranulat mit einer Primärkorngröße von ≤ 500 nm, vorzugsweise ≤ 300 nm, durch zyklisches Pressen auf eine Gründichte von ≥ 40% der theoretischen Dichte (TD) verdichtet wird. Anschließend erfolgt eine Vorsinterung und ein Sinterhippen oder ein konventionelles Sintern bis zum Auftreten einer geschlossenen Porosität und ein Nachhippen des zyklisch gepressten Grünkörpers, so dass die hergestellte transparente Keramik eine Dichte von ≥ 99,8% TD besitzt.

## Beschreibung

Die Erfindung betrifft ein Verfahren zur Herstellung einer polykristallinen transparenten Keramik, die für Licht einer Wellenlange zwischen 600 und 650 nm eine wahre In-Line-Transmission (RIT) von >40% des theoretischen Maximalwertes aufweist.

Um Fahrzeuge, insbesondere Militärfahrzeuge - aber auch Zivilfahrzeuge - vor einem Beschuss zu schützen, werden sie gepanzert. Die Panzerung erfolgt üblicherweise mittels eines Metallsystemes oder mittels eines MetallKeramik-Systemes. Eine solche Panzerung ist jedoch nicht für Fenster enthaltende Bereiche, d.h. für die Seitenscheiben, die Frontscheibe usw. geeignet. Diese zuletzt genannten Bereiche eines Fahrzeuges werden üblicherweise durch Panzerglas geschützt. Panzerglas besitzt jedoch eine relativ geringe ballistische Effizient, insbesondere gegenüber Hartkernmunition, so dass die Fensterbereiche die Schwachstellen eines entsprechenden Fahrzeugs darstellen. Außerdem besitzt Panzerglas ein großes Gewicht, um einen ausreichenden Schutz zu gewährleisten.

Keramikmaterial besitzt ein wesentlich besseres Schutzverhalten.

Aus diesem Grunde wurde bereits nach Alternativen zum Panzerglas gesucht. Diese Alternativen wurden im Wesentlichen in Spinellen (MgAl₂O₄ usw.) und in AION gefunden. Infolge der sehr hohen notwendigen Prozesstemperaturen, sind diese Materialien jedoch grobkristallin mit Korngrößen von deutlich > 1 µm, sogar deutlich > 10 µm und mehr. Aus diesen großen Korngrößen resultieren relativ geringe mechanische Kennwerte, d.h. eine geringe Härte und Festigkeit im Vergleich zu submikronkristallinen Materialien.

Seit jüngerer Zeit ist bekannt, dass bei Keramiken mit Korngrößen <1 µm bei doppelbrechenden Materialien die Transparenz zunimmt, so dass kleinste Korngrößen zwingend notwendig sind. Mit abnehmender Korngröße nehmen außerdem die Festigkeit und Härte bei solchen Keramiken mit einer Korngröße <1 µm deutlich zu.

Aus der Erkenntnis des Zusammenhangs zwischen den mechanischen Kennwerten, wie Härte und Festigkeit, und der Korngröße, sowie bei allen doppelbrechenden Materialien, dem Zusammenhang zwischen Transparenz und Korngröße, ergibt sich der Wunsch nach der Herstellung eines transparenten submikronkristallinen Materials. Ein derartiges transparentes submikronkristallines Material ist z.B. in der EP1 557 402 A2 beschrieben. Dabei erfolgt die Herstellung des transparenten submikronkristallinen Materials ausschließlich über nasse Formgebungsverfahren, wie z.B. Gel-Casting, Slip-Casting, Pressure-Casting, oder eine elektrophoretische Abscheidung.

Alle diese bekannten Formgebungsverfahren weisen jedoch den Mangel auf, dass sie eine aufwendige Trocknung und/oder Entbinderung benötigen. Ein weiterer Mangel besteht in der nur bedingten Oberflächengüte, so dass stets eine aufwendige Oberflächennachbehandlung erforderlich ist.

Aus diesem Grunde ergibt sich der Wunsch nach einer vergleichsweise unkomplizierten wirtschaftlichen Herstellungsmöglichkeit von submikronkristallinen transparenten Keramiken. Bezüglich der erwünschten Wirtschaftlichkeit bieten sich vor allem Pressverfahren an; mit solchen Pressverfahren konnten jedoch bislang keine Keramiken mit akzeptablen optischen und mechanischen Kennwerten realisiert werden.

Die WO 03/057065 A1 offenbart zwar eine transluzente Aluminiumoxidkeramik mit einer mittleren Korngröße von ≤1 µm, bzw. mit Korngrößen um 0,8-0,9 µm. Diese bekannte transluzente Keramik wird jedoch den Ansprüchen nach Transparenz - mit Korngrößen um 0,5 µm - nicht gerecht. Das liegt vor Allem daran, dass die relativ hohe Dichte durch ein relativ starkes Kornwachstum erkauft werden muss. Die Ursache hierfür liegt vor allem in der relativ geringen Sinterfähigkeit des Grünkörpers, die im Wesentlichen durch die Porenverteilung und das Porenvolumen bestimmt wird. Beides ist bei der herkömmlichen Pressformformgebung schlechter als bei den nassen Formgebungsverfahren - insbesondere gilt dies für die Porenverteilung.

Somit existiert bislang keine Möglichkeit, ein submikronkristallines transparentes Keramikmaterial auf wirtschaftlichem Wege herzustellen.

Der Erfindung liegt deshalb die Aufgabe zugrunde, ein Verfahren der eingangs genannten Art zu schaffen, mit welchem ein submikronkristallines transparentes Keramikmaterial auf wirtschaftliche Weise herstellbar ist.

Diese Aufgabe wird erfindungsgemäß durch die Merkmale des Anspruches 1, d.h. dadurch gelöst, dass ein Keramikgranulat, das eine Primärkorngröße von ≤ 500 nm, vorzugsweise ≤ 300 nm, aufweist, durch zyklisches Pressen auf eine Gründicht von ≥ 40% der theoretischen Dichte (TD) verdichtet wird, und dass anschließend ein Sinterhippen (Heißisostatisches Pressen) oder ein konventionelles Sintern bis zum Auftreten einer geschlossenen Porosität und ein Nachhippen des zyklisch gepressten Grünkörpers erfolgt, so dass die hergestellte transparente Keramik eine Dichte von ≥ 99,8% DT besitzt.

Bevorzugte Aus- bzw. Weiterbildungen des erfindungsgemäßen Verfahrens sind in den Unteransprüchen gekennzeichnet.

Die Erfindung basiert also auf einer Technologie zur Herstellung einer polykristallinen transparenten Keramik durch Pressformgebung. Die Transparenz ist verbunden mit Werten von RIT > 40% (am Beispiel von Al₂O₃). Das ist bei Al₂O₃ nur möglich bei Porositätsgraden < 0,05% sowie Korngrößen ≤ 800nm, vorzugsweise < 600nm.

Die geringen Korngrößen sind für kubische Systeme hinsichtlich der Transparenz nicht zwingend notwendig, jedoch für die gewünschten mechanischen Eigenschaften - vor allem Härte und Festigkeit - notwendig. Das erfindungsgemäß hergestellte Keramikmaterial ist besonders zur Realisierung von transparentem ballistischem Schutz von Fahrzeugen, insbesondere zur Herstellung von Fahrzeugfenstern oder zur Herstellung von Infrarot-Radarkuppen geeignet, ohne hierauf beschränkt zu sein.

Da das erfindungsgemäße Verfahren eine Presstechnologie ausnutzt, ist es besonders wirtschaftlich durchführbar.

Das erfindungsgemäße Verfahren zur Herstellung submikronkristalliner transparenter Keramiken ist deshalb vorteilhaft, weil über die wirtschaftliche Presstechnologie Eigenschaften bezüglich Transparenz und mechanischer Kennwerte, wie Härte und Festigkeit, erzielt werden, die bislang nur mittels einer nassen Formgebung, wie sie in der eingangs zitierten EP 1 557 402 A2 beschrieben ist, möglich sind. Die erfindungsgemäß zur Anwendung gelangende Presstechnologie ist außerdem unter dem Gesichtspunkt vorteilhaft, dass auch relativ große Bauteile mit Flächenabmessungen von > 200 mm x 200 mm hergestellt werden können.

Erfindungsgemäß wird das Keramikgranulat durch zyklisches Pressen verdichtet. Bei diesem zyklischen Pressen kann es sich um ein uniaxiales oder um ein isostatisches Pressen oder um eine Kombination dieser beiden Pressverfahren handeln.

Die Besonderheit liegt erfindungsgemäß in der Anpassung des zyklischen Pressens auf Submikronkeramiken, die - wie sich in überraschender Weis gezeigt hat - besonders auf dieses Verfahren anzusprechen scheinen. Bei diesen Submikronkeramiken sind durch das zyklische Pressen höchste Verdichtungen - ohne Pressdrücke von ≥ 500 MPa anzuwenden - möglich. D.h. nur durch den erfindungsgemäß beobachteten Effekt werden die erwünschten Eigenschaften bezüglich Transparenz und den gewünschten mechanischen Eigenschaften möglich.

Die durch das erfindungsgemäße zyklische Pressen erlangten Gründichten entsprechen bei einer passenden Anzahl von Presszyklen Pressdrücken von deutlich >1 000 MPa. Erfindungsgemäß können also deutlich höhere Gründichten erzielt werden, als unter bekannten normalen Umständen möglich wären. Außerdem ist es möglich, die Porenverteilung in vorteilhafter Weise zu reduzieren und somit die Homogenität des hergestellten Keramikmaterials zu erhöhen; insbesondere die größten Poren verschwinden.

Das verpresste Keramikmaterial wird anschließend entweder vorgesintert und sintergehippt oder bis zum Auftreten von geschlossener Porosität gesintert und anschließend nachgehippt. Im Hip-Prozess liegt eine weitere Besonderheit der vorliegenden Erfindung:

Das Material wird bspw. in einer widerstandsbeheizten Kanthal-Hippe, bevorzugt unter Luft, oder in einer Argonatmosphäre oder im Vakuum, gehippt. Durch den Verzicht auf Kohlenstoff-Heizelemente wird verhindert, dass oft berichtete Kohlenstoffverunreinigungen bzw. Reduktionserscheinungen auftreten können. Das ist jedoch nur möglich, wenn die Hip-Temperatur unterhalb von 1240°C, besser unter 1200°C, liegt. Die geringen Hip-Temperaturen bedingen in vorteilhafter Weise wiederum eine geringe Vorsintertemperatur, so dass zum Hippen ausreichend Sinteraktivität vorhanden bleibt. Die Absenkung der Gesamttemperatur ist nur durch entsprechende Grünkörper - wie erwähnt - möglich.

Die Erfindung umfasst jedoch auch andere Hip-Varianten, wie Molybdän- oder Kohlenstoff-Hippen, hinsichtlich erhöhter Transparenzgrade ist jedoch besonders die Verwendung der erwähnten Kanthal-Hippe bevorzugt.

Zur abschließenden Präparation können erfindungsgemäß hergestellte Bauteile poliert werden, so dass sich RIT-Werte >40% ergeben.

Die Bauteile-Geometrien sind erfindungsgemäß nur durch die Möglichkeiten der üblichen Grünbearbeitung wie bspw. CNC-Fräsen, Schneiden, Drehen, usw. der Bauteile begrenzt.

Die für die Transparenz der erfindungsgemäß hergestellten Bauteile verantwortliche Größe ist die zwecks Ausschluss von Streulicht aus der erfassten Intensität nur mit sehr engem Aperturwinkel von ca. 0,5 DEG zu messende "wahre" (real) In-Line-Transmission (RIT).

Mit Hilfe des erfindungsgemäßen Verfahrens wird eine transparente polykristalline Keramik hergestellt, die quasi keine Glasphase (<0, 1 %) und eine Dichte von > 99,5 bzw. weiter verbessert ≥ 99,9% der theoretischen Dichte (TD) besitzt.

Als Werkstoffe zum Erreichen dieses Ziels können alle Werkstoffe dienen, die Härten von ≥ GPa besitzen und bei Korngrößen < 1 µm und einer Porosität ≤ 0,1 % transparent werden. Bevorzugt sind hierbei Aluminiumoxid, Spinelle(MgAl₂O₄ etc.), AION oder Perowskite (z.B. YALO₃) oder Granate (Z.B.:Y₃A₅O₁₂).

Voraussetzung dafür sind Ausgangsstoffe mit einer Reinheit von ≥ 99 % und einer Ausgangskorngröße von ≤ 500 nm, vorzugsweise ≤ 300 nm.

Die Keramik soll vorzugsweise nahezu keine Porosität enthalten, d.h. die Porosität soll ≤ 0,1 % betragen. Außerdem soll die Korngröße < 0,8 µm, vorzugsweise < 0,6 µm sein. Es sollen weniger als 5 % der Körner > 1 µm sein.

Diese Kombination aus höchster Dichte und geringster Korngröße garantiert RIT-Werte von ≥ 40%.

Aus der Kombination der angegebenen Werte ergibt es sich, dass die erfindungsgemäß hergestellte Keramik über die Transluzenz hinaus transparent ist. Das ist der ganz wesentliche Unterschied zu den bislang bekannten transluzenten Keramiken, die über eine Pressformgebung - wie die EP 1 458 304 A 1 offenbart - hergestellt wurden.

Die RIT wird mit rotem Licht der Wellenlänge 640 nm mittels eines Spektrophotometers integral bestimmt. RIT wird dabei derartig bestimmt, dass nur der Anteil durchgehenden Lichtes innerhalb eines Winkels von ≤ 0,6 DEG um die gerade Achse erfasst wird.

Die besonderen Eigenschaften der erfindungsgemäß hergestellten Keramik basieren im Wesentlichen auf dem erfindungsgemäßen, auf die Submikronkeramik abgestimmten Herstellungsverfahren. Basis des erfindungsgemäßen Herstellungsverfahrens stellt axiales Trockenpressen sowie isostatisches Pressen oder eine Kombination aus diesen beiden Presstechnologien dar. Das so hergestellte Keramikmaterial kann, muss jedoch nicht weiter geformt werden.

Die Herstellung der erfindungsgemäßen Keramik läuft über die Herstellung eines Granulates, das auf verschiedenste Weisen hergestellt werden kann. Bspw. kann eine Sprühgranulation, eine Wirbelschichtgranulation oder ein Partikelcoating erfolgen. Das dafür verwendete Ausgangspulver soll Primärkorngrößen < 500 nm, besonders bevorzugt ≤ 300 nm aufweisen. Nur so können Korngrößen < 600 nm realisiert werden.

Um das Material in eine pressfähige Form zu überführen, kann es mit Presshilfsmitteln und/oder Binder und/oder Gleitmittel versetzt werden. Dieses Material wird dann in die gewünschte Form gepresst. Das so geformte Bauteil besitzt bspw. eine Höhe ≤ 10 mm und ist in Flächenabmessungen von 30 bis 1000 mm Kantenlänge herstellbar. Die Herstellung der gewünschten Form erfolgt über die Presstechnologie zu einer Gründichte von ≥ 40 % TD.

Die letzte Pressformgebung wird hierbei derartig durchgeführt, dass der maximale Pressdruck, oder ein Pressdruck darunter, mehrfach angefahren wird, so dass höhere Gründichten ermöglicht werden als normal bei einer konventionellen Pressung erreichbar sind. Erfindungsgemäß sind Gründichten möglich, die min. 2 %, vorzugsweise 5 %, oder weiter bevorzugt 8 % größer sind als Gründichten, wie sie bei konventionellem Pressen mit einmaligem Anfahren des Maximaldrucks möglich sind. Als letzte Prozessstufe kann ein uniaxiales oder ein isostatisches Pressen dienen.

Das Material wird dann bei der niedrig möglichsten Sintertemperatur vorgesintert oder nur geschrüht (bspw. bis 700°C ohne oder mit einer Haltezeit von 1 bis 3 Stunden). Anschließend kann ein Sinterhip-Vorgang erfolgen, der in verschiedenen Sinteratmosphären, wie Argon oder Luft oder im Vakuum durchgeführt wird. Alternativ kann das Bauteil auch konventionell vorgesintert und anschließend gehippt werden. Sintertemperatur und Hip-Temperatur richten sich nach dem zur Anwendung gelangenden Rohstoff und der Anzahl der verwendeten Presszyklen.

Anschließend erfolgt ein Hip- oder auch ein Nachhipprozess.

Um die gewünschte Transparenz zu erzielen, ist im Falle des Vorsinterns ein Nachhippen notwendig; im Falle des Sinterhippens erfolgt die gesamte Sinterung im Hip-Ofen. Beim Sinterhippen kann die Dichtsintertemperatur im Vergleich zur Dichtsintertemperatur zum Vorsintern durch geeignete Atmosphärenwahl weiter abgesenkt werden.

Das Hippen geschieht generell bei Temperaturen bis 100°C unterhalb der Sintertemperatur, bevorzugt unterhalb 1240°C, um in einer Kohlenstofffreien, nichtreduzierenden Atmosphäre Hippen zu können. Es sind auch Hip-Temperaturen bis 100°C oberhalb der Sintertemperatur möglich, sie werden jedoch weniger bevorzugt.

Der verwendete Druck beträgt 100 bis 200 MPa, bevorzugt ≥ 210 MPa aber ≤ 350 MPa. Als Druckgas können Argon, Luft, oder andere Gase dienen. Luft erlaubt eine beschleunigte Sinterung und verhindert Reduktionserscheinungen und somit eine weitere Absenkung der Hip-Temperatur. Luft wird deshalb besonders bevorzugt.

Die Dichte nach dem Hip-Prozess beträgt ≥ 99,8 % TD.

Erfindungsgemäß kommen bspw. die folgenden Test-Methoden zur Anwendung:
Härte: Die Härte wurde analog zu DIN V ENV 843-4 bestimmt. Als Last dienten 10 kg. Die Eindringzeit beträgt 5 sec. Die dargestellten Härtewerte sind Mittelwerte aus zehn Messungen.
Dichte: Die Dichte wurde analog zu DIN EN 623-2 nach der Archimedesmethode bestimmt. Als Theoretische Dichte für Al₂O₃ wurden 3,987g/cm³ angenommen. Für andere Werkstoffe gelten andere Theoretische Dichten (Spinell z.B. 3,578 g/cm³).
RIT: Die für die Durchsichtigkeit, d.h. Transparenz von Materialien verantwortliche Größe ist die zwecks Ausschluss von Streulicht aus der erfassten Intensität nur mit sehr engem Aperturwinkel von ca. 0,5 DEG zu messende "wahre" (real) In-Line-Transmission (RIT).
Rohstoffcharakterisierung: Die Charakterisierung der Rohstoffe erfolgt bspw. durch den Rohstofflieferanten.
Korngröße: Die Korngröße ist ermittelt worden, indem die Flächen der einzelnen Kristalle, die nach thermischem Ätzen unter dem SEM sichtbar waren, zu äquivalenten Kreisdurchmessern umgerechnet wurden. Die so ermittelten Korngrößen wurden mittels Korrekturfaktor auf "Wahre Korngrößen" umgerechnet, die den in der Literatur angegebenen Werten entsprechen. Der Korrekturfaktor entspricht dem Faktor von 1,56 der für die "average intercept length" Methode verwendet wird.

Nachfolgend wird die Erfindung anhand von Ausführungsbeispielen weiter erläutert.

### Beispiel1:

Es wurde Aluminiumoxidgranulat (TM-DS-90M) der Firma Taimeh bezogen und bei 260 MPa 32-fach zyklisch verpresst. Daraus resultierte eine Gründichte von 59,5 % TD (TD bei 260MPa konventionell = 56 %) und somit ein schmaleres Kornband mit einer kleineren maximalen Porengröße. Daraus resultierte eine deutlich verringerte Sintertemperatur. Bei einer Temperatur von 1190°C und 2 Stunden Haltezeit ergab sich eine Sinterdichte von 96 %. Diese Probe wurde bei 1170°C und 2 Stunden Haltezeit in einer Kanthal-Hippe in Luftatmosphare bei 300 MPa nachgehippt. Die Abkühlung erfolgte ungeregelt.
Danach stellte sich eine Dichte von > 3,98 g/cm³ ein, welches > 99,9 % der Theoretischen Dichte entspricht. Die Korngröße lag bei etwa 500 nm.

Aus der Kombination von höchster Dichte und geringstem Kornwachstum ergab sich ein RIT-Wert von 41 %.

### Beispiel2:

Das verpresste Material aus Beispiel 1 wurde bei 650°C 2 Stunden geschrüht und anschließend in der Kanthal-Hippe aus Beispiel1 sintergehippt. Beim Hip-Prozess wurde bis 1240°C mit 20K/Min aufgeheizt, anschließend erfolgte eine kurze Haltezeit von 10 Minuten. Diese erste Stufe erfolgte in Vakuum. Nach Ablauf der Haltezeit wurde auf 1180°C abgekühlt und ein Luftdruck von 300 MPa aufgebracht. Bei 1180°C erfolgte eine isothermische Haltezeit von 2 Stunden. Die Abkühlung erfolgte ungeregelt.
Danach stellte sich eine Dichte von ca. 3,99 g/cm³ ein, welches im Rahmen der Messgenauigkeit der Theoretischen Dichte entspricht. Die Abkühlung erfolgte ungeregelt. Die Korngröße lag bei etwa 450 nm. Aus der Kombination von höchster Dichte und geringstem Kornwachstum ergab sich ein RIT-Wert von 50%.

### Beispiel3:

Der Vorgang entsprach dem des Beispiels 1 mit dem Unterschied, dass isostatisch verpresst wurde, die Zyklenanzahl blieb gleich. Die sich einstellende Gründichte lag mit 59% etwas unterhalb der des uniaxialen zyklischen Pressens. Sintern und Hippen verlief analog Beispiel1.
Danach stellte sich eine Dichte von > 3,98 g/cm³ ein, welches > 99,9 % der Theoretischen Dichte entspricht. Die Korngröße lag bei etwa 500 nm. Aus der Kombination von höchster Dichte und geringstem Kornwachstum ergab sich ein RIT-Wert von 45%.

## Patentansprüche

1. Verfahren zur Herstellung eines Keramikkörpers, umfassend die Schritte:
a) Herstellung eines Keramikgranulats aus einem Ausgangspluver mit einer Primärkorngröße < 500 nm, vorzugsweise ≤ 300 nm,
b) Pressen des Keramikgranulats zu einem Grünkörper,
c) Sintern des Grünkörpers,
**dadurch gekennzeichnet, dass** Schritt b) ein zyklisches Pressen auf eine Gründichte ≥ 40 % der theoretischen Dichte umfasst, wobei die Gründichte mindestens 2 %, vorzugsweise 5 % und insbesondere bevorzugt mindestens 8 % größer ist als eine Gründichte, die mit einmaligem Anfahren des Maximaldrucks bei konventionellem Pressen erreichbar wäre.

2. Verfahren nach Anspruch 1, **dadurch gekennzeichnet**, in Schritt b) uniaxial oder isostatisch gepresst wird.

3. Verfahren nach einem der vorstehenden Ansprüche, **dadurch gekennzeichnet, dass** das zyklische Pressen in Schritt b) bei einem Pressdruck unterhalb des maximalen Pressdrucks mehrfach durchgeführt wird.

4. Verfahren nach einem der vorstehenden Ansprüche, **dadurch gekennzeichnet, dass** das Keramikgranulat in Schritt a) durch Wirbelgranulation oder durch Partikelcoating hergestellt wird.

5. Verfahren nach einem der vorstehenden Ansprüche, **dadurch gekennzeichnet, dass** das Keramikgranulat in Schritt a) mit Presshilfsmitteln und/oder Binder und/oder Gleitmittel versetzt wird.

6. Verfahren nach einem der vorstehenden Ansprüche, **dadurch gekennzeichnet, dass** das Sintern in Schritt c) eine Vorsinterung und ein Sinterhippen des Grünkörpers umfasst.

7. Verfahren nach einem der Ansprüche 1 bis 5, **dadurch gekennzeichnet, dass** das Sintern in Schritt c) ein konventionelles Sintern bis zum Auftreten einer geschlossenen Porosität und ein Nachhippen des Grünkörpers umfasst.

8. Verfahren nach Anspruch 6, **dadurch gekennzeichnet, dass** die Vorsinterung bei der niedrigst möglichen Sintertemperatur oder durch Schrühen, insbesondere bei einer Temperatur um 700°C erfolgt.

9. Verfahren nach Anspruch nach Anspruch 6 oder 7, **dadurch gekennzeichnet, dass** das Sinterhippen in einer Sinteratmosphäre aus Argon oder Luft oder im Vakuum erfolgt.

10. Verfahren nach Anspruch 6 oder 7, **dadurch gekennzeichnet, dass** das Sinterhippen oder das Nachhippen bei einem Druck von ≥ 100 bis 200 MPa, vorzugsweise zwischen ≥ 200 MPa und ≤ 50 MPa erfolgt.

11. Verfahren nach Anspruch 6 oder 7, **dadurch gekennzeichnet, dass** das Sinterhippen oder das Nachhippen in einer mit Kohlenstoff oder in einer mit Molybdän oder einer mit Kanthal bekleideten Hippe erfolgt.

12. Verfahren nach einem der vorstehenden Ansprüche, **dadurch gekennzeichnet, dass** nach Schritt c) noch ein Schritt e), umfassend das Polieren des Keramikkörpers, erfolgt.

13. Keramikkörper, hergestellt nach einem der vorstehenden Ansprüche, **dadurch gekennzeichnet, dass** die Korngröße der Keramik ≤ 800 nm, bevorzugt ≤ 600 nm ist, wobei bevorzugt weniger als 5 % der Körner eine Korngröße > 1 µm aufweisen.

14. Keramikkörper nach Anspruch 13, **dadurch gekennzeichnet, dass** der Keramikkörper eine theoretische Dichte von ≥ 99,8 % aufweist.

15. Verwendung einer nach den Ansprüche 1 bis 12 hergestellten Keramik als ballistischen Schutz von Militär- und/oder Zivilfahrzeugen.
